# EUROPEAN PATENT APPLICATION

(11) **EP 2 180 183 A1**
(43) Date of publication of application: **28.04.2010**
(21) Application number: 08018595.2
(22) Date of filing: 23.10.2008
(51) Int. Cl.: F03D 7/02, F03D 7/04

(54) **Stall detection by use of pressure sensors**

(71) Applicant: Siemens Aktiengesellschaft, 80333 München (DE)
(72) Inventor: Enevoldsen, Peder Bay, 7100 Veijle (DK); Frydendal, Ib, Stenderup 6683 Føvling (DK); Laursen, Jesper, 8600 Silkeborg (DK)

(57) **Abstract**

The present invention relates to a blade (100) for a wind turbine (400). The blade (100) comprises a blade surface (101) and a pressure gauge device (102) for providing a pressure value for being used for stall detection. The pressure gauge device (102) is located at the blade surface (101) in such a manner, that a pressure of a fluid (104) that flows along the blade surface (101) is measurable by the pressure gauge device (102).

## Description

### Field of invention

The present invention relates to the field of wind turbines. Moreover, the present invention relates to a blade for a wind turbine and to a wind turbine device comprising at least one blade. Moreover, the present invention relates to a method of detecting stall from a blade for a wind turbine.

### Art Background

In wind turbines, the wind turbine blades are adjusted for an optimal pitch strategy. I.e., the wind turbine blade is designed and adjusted in order to determine the optimal relation between lift and drag on the blade.

Wind turbine blades provide a blade profile comprising a leading edge and a trailing edge. The leading edge comprises a front stagnation point at which the fluid, such as air, streams against the wind turbine blade. From the front stagnation point, the flow stream is divided and a first part of the stream flows over one blade surface and another part of the flow stream flows over the other blade surface of the wind turbine blade. Due to different velocities and pressures of the flow stream along the blade surfaces, a pressure difference between the blade surfaces is provided. Thus, a lift force is established that forces the blade to move from the high pressure side to the low pressure side. Thus, the low pressure side may be called "suction side" and the high pressure side may be called "pressure side".

The location of the front stagnation point at the blade surface of the blade depends on the pitch angle or the angle of attack α of the fluid. The angle between a chord line of a blade (i.e. the centred line of a blade profile) and the vector representing the relative motion between the blade and the fluid, i.e. the flow direction of the fluid, may be called "angle of attack". The "pitch angle" may define an angle between a chord line of a blade and a theoretically predetermined rotor plane or zero rotor plane. An increasing of the angle of attack respectively a pitch of a blade with respect to the flow direction of the fluid flow may increase the lift but may also lead to a stall of the fluid flow along the suction side of the blade. Thus, if stall of the fluid flow along the suction side occurs, the fluid flow is not longer attached but separated and thus the lift breaks down.

### Summary of the Invention

It may be an object of the present invention to provide a pitch angle for a blade with a proper degree of efficiency for producing lift.

The object may be solved by the subject-matter according to the independent claims. Advantageous embodiments of the present invention are described by the dependent claims. In particular, in order to achieve the object defined above, a blade for a wind turbine, a wind turbine with at least one blade and a method of detecting a stall from a blade for a wind turbine according to the independent claims are provided.

According to an exemplary embodiment of the present invention, a blade for a wind turbine is provided. The blade comprises a blade surface and a pressure gauge device for providing a pressure value for being used for stall detection. The pressure gauge device is located at the blade surface in such a manner that a pressure of a fluid that flows along the blade surface is measurable by the pressure gauge device.

According to a further exemplary embodiment a wind turbine device is described that comprises at least one above-described blade.

According to a further exemplary embodiment, a method of detecting a stall from a blade for a wind turbine is provided. A pressure of a fluid flowing along a blade surface of the blade is measured by means of a pressure gauge device which is located at the blade surface.

The term "blade" may describe a blade of a wind turbine wherein the blade may be exposed to a fluid or a fluid stream. A blade may comprise a blade profile with a curved blade surface on the one side and another curved blade surface on the other side. The fluid may flow along the blade surfaces. Due to the different curvatures of the curved profiles of the blade surfaces, a lift may be provided by exposing the profiles to the fluid.

The term "pressure gauge device" may describe a device for measuring a fluid pressure at the airfoil, in particular at the blade surfaces of the blade. A pressure gauge device may comprise for instance a piezo pressure sensor, differential pressure sensors, a Prandtl's Pitot tube sensor or any other device that measures the fluid pressure at the airfoil surface.

The term "angle of attack" may describe the angle between the chord line of a blade and the vector representing the relative motion between the blade and the fluid direction. It may be described as the angle between where the chord line of the blade is pointing and the flow direction of the fluid. The lift coefficient of the blade may be directly related to the angle of attack. An increasing of the angle of attack is associated with an increasing lift coefficient up to the maximum lift coefficient, after which the lift coefficient decreases again. As the angle of attack on the blade increases, separation of the fluid from the one surface of the blade becomes more pronounced, leading to a reduction in the rate of increase of the lift coefficient. At the critical angle of attack, stall of the fluid occurs.

The term "pitch angle" may describe an angle measured between the chord line of a blade and the rotor plane, whereas the angle of attack may be measured with respect to the relative motion between the blade and the atmosphere or the fluid. The pitch angle may define an angle between the chord line of the blade and a predetermined zero position of the blade, such as a predetermined rotor plane.

In conventional wind turbines, the pitch controlling scheme is normally based on assumptions of clean rotor blades at certain predetermined inflow conditions. Therefore, in conventional wind turbines, the pitch angle or the angle of attack of the blades is not adapted to environmental conditions or influences such as turbulences, dirt, water and ice for instance. In case that these environmental conditions occur at the blade surfaces of the turbine, the fluid may break off from the blade surface unintentionally.

By the subject-matter of the present invention, a pressure gauge device may measure a fluid pressure at the surface of a wind turbine blade. Thus, if stall of the fluid along the blade surface occurs, a pressure decrease or increase of the fluid may be measured by the pressure gauge device. I.e., if an excursive pressure decrease or increase of the fluid is detected, it may be indicative of a stall of the fluid along the blade surface. Thus, by having now a possibility to measure the pressure of the fluid and therefore the possible stall of the fluid along the blade surface of the blades, a pitch angle of the blade may be adjusted for providing or keeping an attached flow of the fluid along the blade surface, so that stall may be prevented.

With other words, by measuring the pressure of the fluid that flows along the blade surface, unintentional stall due to environmental conditions such as turbulences, dirt, water and ice, may be prevented and a decrease in performance of the blade may be avoided. With other words, while conventional pitch control of wind turbine blades normally relies on theoretical calculations assuming clean rotor blades, by the present invention an adjustment of the blades in consideration of environmental conditions may be provided and thus a high lift to drag ratio of the wind turbine blades may be ensured and improved.

According to a further exemplary embodiment, the blade comprises an additional pressure gauge device. An additional pressure gauge device is located at the blade surface in such a manner that an additional pressure of the fluid that flows along the blade surface of the wind turbine blade is measurable by the pressure gauge device. Thus, single pressure values may be measured along a large area of the blade surface so that a meaningful measurement to detect stall along the blade surface or only in one single point of the blade surface may be provided. Thus, the number of failure measurements of the status of an operational mode of the blade may be reduced.

According to a further exemplary embodiment, the particular blade surface is the suction side of the blade. I.e. if the pressure gauges are located at the suction side of the blade, a measuring quality may be improved because usually stall of the blades occurs most of the time in the region with the low pressure, namely at the suction side of a profile respectively the blade. Thus, the probability to measure stall may be increased.

According to a further exemplary embodiment the blade comprises in a flow direction of the fluid a first portion with an increasing thickness and a second portion with a decreasing thickness. The pressure gauge device and/or the additional pressure gauge device are located in the decreasing portion. The rear stagnation point occurs most of the time in the vicinity of the trailing edge, i.e. around the second portion. Thus, if the pressure gauge devices are located in the second portion, the probability of measuring the stagnation point may be improved.

According to a further exemplary embodiment, the pressure gauge device and the additional pressure gauge device are arranged in a row along the flow direction of the fluid. The flow direction of the fluid may be directed from first front stagnation point in the region of the leading edge to the trailing edge of the blade. The fluid is split up by the front stagnation point and a part that flows along the suction side and another part along the pressure side of the blade. If the pressure gauge and the additional pressure gauge are arranged in a row along the suction side, an improved measurement of stall of the blades may be provided. Stall may occur if the fluid changes its structure from attached flow, i.e. a parallel flow with respect to the blade surface, to separated flow, i.e. the fluid flow is not longer attached and parallel to the blade surface.

The point where the fluid changes from an attached flow to a separated flow may occur at the rear stagnation point. By placing the pressure gauge device and the additional pressure gauge device along the flow direction of the fluid, the pressure gauge device at an upstream position before the rear stagnation point may measure a regular pressure indicating a attached flow wherein the additional pressure gauge device that is arranged in a downstream position with respect to the rear stagnation point may measure the pressure of a separated fluid and thus a higher pressure (with respect to the part of the suction side with attached flow), for instance. Thus, by comparing the two measured pressure values of the pressure gauge device and the additional pressure gauge device, a detection of a stall of the fluid may be provided. Furthermore, the location of the rear stagnation point may be measured, because the locations of the pressure gauges are known. I.e. the rear stagnation point may be located between the pressure gauges due to a high pressure difference or may be located in an upstream position of the pressure gauges due to a high measured pressure of the fluid or may be located in a downstream position due to the measured low pressure of the fluid. If the location of the rear stagnation point is known, an improved adjustment of the blade pitch, i.e. the pitch angel, may be provided.

According to a further exemplary embodiment, the blade extends along a longitudinal direction. The pressure gauge device and the further pressure gauge device are located along the longitudinal direction of the blade.

The term "longitudinal direction" may define the blade span of the blade, in particular the extension of the blade starting from a point of connection to the wind turbine to the tip of the blade.

By distributing the pressure gauge devices and the additional pressure gauge devices along the longitudinal direction of the blade, failure measurements may be reduced. By measuring at several locations along the longitudinal direction of the blade surface, failure measurements that occur only in a small region on the blade do not cause a failure adjustment of the pitch angle of the blade. For instance, if a flow distracting dirt particle is located only at a small region along the longitudinal direction of the blade and stall is measured only in this small region, an adjustment of the pitch angle due to the small stall region may lead to a reduced efficiency. With other words, due to the pressure measurement along the (complete) longitudinal direction of the blade a fluid flow pattern along the whole blade surface of the blade along the extension direction may be measured and an improved adjustment of the pitch angle or the angle of attack with respect to the average fluid flow pattern may be provided.

According to a further exemplary embodiment, a blade comprises a plurality of pressure gauge devices, i.e. a plurality of pressure gauge devices and a plurality of further pressure gauge devices may be provided. By using a plurality of pressure gauge devices a more detailed flow pattern of a fluid may be provided and an improved adjustment of the blade pitch, i.e. the pitch angel, may be provided.

According to a further exemplary embodiment, the wind turbine device may further comprise a control unit being assigned to at least one blade. The control unit is adapted for controlling the pitch angle of the at least one blade in response to a measured fluid pressure at the blade surface. Thus, the blades of the wind turbine may be adjusted by the control unit so that each single blade is adjusted with respect to the fluid direction of the fluid measured fluid pressures and thus to the fluid direction of the fluid. The control unit may consider the pressure values that are measured by each single pressure gauge device of the blades so that each single blade may be adjusted by the control unit individually according to an individual measured pressure or stall at the respective blade. For instance, if a low or a high pressure of the fluid is measured, which may indicate stall along a certain location of the blade surface, the control unit may be able to change the angle of attack or the pitch angle so that stall may be prevented. With other words, the control unit may adjust the angle of attack or the pitch angle in such a way, that flow separation along a blade surface may be transformed to attached flow along a blade surface. Therefore, the overall degree of efficiency of the whole wind turbine may be improved.

Beneath the angle of attack or the pitch angle of the blade the control unit may also control the jaw angle and/or the roll angle of the blade in order to improve the adjustment and the degree of efficiency of the blade.

It has to be noted that embodiments of the invention have been described with reference to different subject matters. In particular, some embodiments have been described with reference to apparatus type claims whereas other embodiments have been described with reference to method type claims. However, a person skilled in the art will gather from the above and the following description that, unless other notified, in addition to any combination of features belonging to one type of subject matter also any combination between features relating to different subject matters, in particular between features of the apparatus type claims and features of the method type claims is considered as to be disclosed with this application.

The aspects defined above and further aspects of the present invention are apparent from the examples of embodiment to be described hereinafter and are explained with reference to the examples of embodiment.

### Brief description of the drawings

The invention will be described in more detail hereinafter with reference to examples of the embodiments to which the invention is not limited.
Fig. 1 illustrates a blade comprising a pressure gauge device according to an exemplary embodiment of the invention;
Fig. 2 illustrates a blade including a rear stagnation point between a pressure gauge device and the further pressure gauge device according to an exemplary embodiment of the invention;
Fig. 3 illustrates a blade wherein the rear stagnation point is located in an upstream position with respect to the pressure gauge device according to an exemplary embodiment of the invention;
Fig. 4 illustrates a wind turbine system including blades with stall detection according to an exemplary embodiment of the present invention.

### Detailed Description

The illustration in the drawing is schematically. It is noted that in different figures, similar or identical elements are provided with the same reference signs or with reference signs, which are different from the corresponding reference signs only within the first digit.

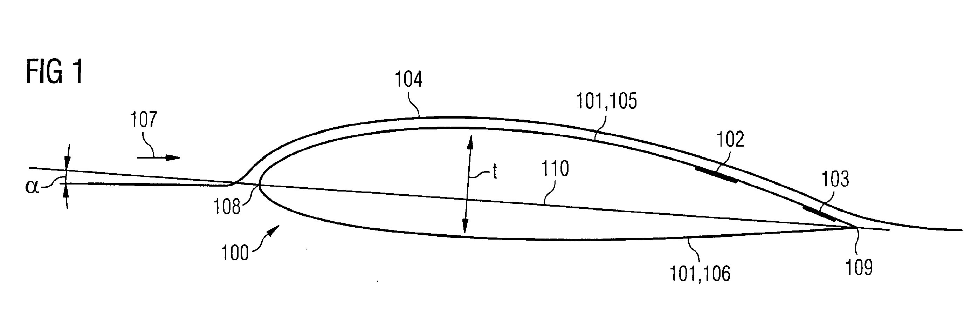

**Fig. 1** shows a blade 100 of a wind turbine 400. The blade 100 comprises a blade surface 101 and a pressure gauge device 102 for providing a pressure value for being used for stall detection. The pressure gauge device 102 is located at the blade surface 101 in such a manner, that a pressure of the fluid 104 that flows along the blade surface 101 is measurable by the pressure gauge device 102.

By measuring the pressure of the fluid 104 that flows along the blade surface 101, a stalled region of the fluid that flows along the surface or a region of a separated flow of the fluid 104 may be detectable. Thus, a stall of the fluid 104 from the blade surface 101 may be measured. Stall of the fluid 104 may occur due to environmental conditions, such as turbulence, dirt accumulations, water and/or ice for instance.

Fig. 1 furthermore shows a typical blade profile of a blade section 100. The blade 100 may comprise a leading edge 108 and a trailing edge 109. The leading edge 108 may be exposed to the flow direction 107 respectively to the fluid 104 at a location at a location of the blade 100 where the fluid 104 impacts for the first time the blade 100. The fluid 104 may be separated at the leading edge 108 and separated into a fluid part flowing along the suction side 105 and a fluid part flowing along the pressure side 106. The suction side 105 and the pressure side 106 may provide a curved blade surface 101 wherein a part of the fluid 104 flows along. Furthermore, the blade 100 comprises a thickness t, i.e. the thickness t may define the distance between the suction side 105 and the pressure side 106. From the leading edge 108 the thickness t of the blade increases to a maximum. From the location of the maximum thickness t to the trailing edge 109, the thickness t of the blade 100 decreases.

Fig. 1 furthermore illustrates a pressure gauge device 102 and an additional pressure gauge device 103 that are located at the blade surface 101 of the blade 100. The pressure gauge device 102 and the additional pressure gauge device 103 may measure the pressure of the fluid 104.

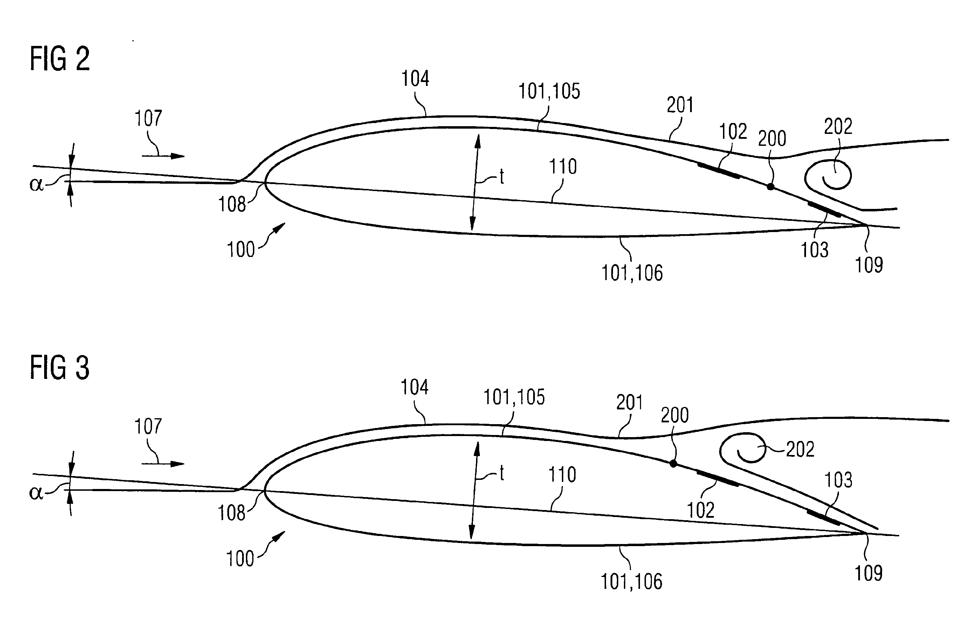

**Fig. 2** illustrates a blade 100 wherein a rear stagnation point 200 at the suction side 105 is provided. Before the rear stagnation point 200, in particular upstream the fluid 104 along the flow direction 107, the fluid 104 is attached, which means that the streamlines of the fluid 104 are parallel to the surface or the curvature of the suction side 105 or the pressure side 106. Downstream the rear stagnation point 200, a stall region is provided, i.e. a separated flow 202 occurs for instance due to environmental conditions such as dirt or ice. Flow separation may also occur due to an overstated pitch angle α or angle of attack of the blade 100 with respect to the incoming flow direction 107 of the fluid 104. In a stall region, no lift may be provided anymore.

The pitch angle α may be defined by an angle between the chord line 110 of the blade 100 and the predetermined rotor plane or zero rotor plane. The angle of attack may be defined by an angle between the chord line 110 and the flow direction 107 of the fluid 104 when streaming against the front stagnation point. The chord line 110 may refer to the distance between the leading edge 108 and the trailing edge 109 of the blade 100, measured in the direction of the normal flow direction 107. These front and back points of the chord line 110 may be referred to as the leading edge 108 and trailing edge 109.

As shown in Fig. 2, the pressure gauge device 102 is located upstream of the rear stagnation point and the additional pressure gauge device 103 is located downstream of the rear stagnation point 200. Thus, in the present example, the pressure gauge device 102 measures the pressure of the fluid 104 in an attached flow state and the additional pressure gauge device 103 is located downstream of the rear stagnation point 200 and thus measures a higher pressure in the separated flow 202 (with respect to the pressure of the attached flow). Due to a comparison of the measured fluid pressures, it may be determined that a stall region exits around the region of the additional pressure gauge device 103. Furthermore, the location of the rear stagnation point 200 may be determined due to the different pressures that are measured by the pressure gauge device 102 upstream the rear stagnation point 200 and the additional pressure gauge device 103 downstream of the rear stagnation point. I.e. due to the increase in pressure of the fluid 104 downstream the rear stagnation point 200 at the suction side 105, stall of the fluid 104 is measurable. A stall located at the separated flow at the pressure side 106 would on contrary lead to a lower pressure in comparison to the attached fluid 104 at the pressure side 106.

It may be also possible to locate the pressure gauge device 102 and/or the additional pressure gauge device 103 in the increasing first portion of the blade 100 for measuring a pressure of the fluid 104. Stall in the region of the trailing edge 109 may be detected because separated flow 202 in the second portion, i.e. around the trailing edge 109, may also affect the pressure of the fluid 104 in the region of the attached flow 201 at the first portion.

Furthermore, it may be also possible to locate the pressure gauge device 102 and/or the additional pressure gauge device 103 to the lower side, i.e. the pressure side 106, of the blade 100. Therefore, stall that may occur at the pressure side 106 may also be measured. Furthermore, the measurement of stall that occurs at the suction side 105 may be supplemented by a measurement of the pressure at the pressure side 106. The pressure gauge device 102 measures the pressure of the fluid 104 in an attached flow state and thus at the pressure side 106 at a high pressure state. The further pressure gauge device 102, located downstream the rear stagnation point 200, and thus measures a lower pressure of the separated flow 202 in comparison to the upstream located pressure gauge device 102. By comparing the measured fluid flow pressures, it may be determined that a stall region exits around the region of the further pressure gauge device 103, e.g. due to the decrease in pressure of the fluid 104 downstream the rear stagnation point 200.

**Fig. 3** illustrates a blade 100 wherein the pressure gauge device 102 and the additional pressure gauge device 103 are located downstream of the rear stagnation point 200. Thus, a decrease in pressure gradient between the two gauges or an increase of the pressures measured at the gauges may indicate a stall region respectively a separated flow 202 of the fluid 104 at the suction side 105. Furthermore, a decrease in pressure gradient between the two gauges 102, 103 or an increase of the pressures measured at the gauges 102, 103 may also indicate a stall region respectively a separated flow 202 of the fluid 104 at the pressure side 106.

The location of both pressure gauge devices 102, 103 may also be upstream with respect to the rear stagnation point 200. Thus, both pressure gauge devices 102, 103 may measure pressures in attached flow conditions. Nevertheless, a stall of the fluid 104 downstream the rear stagnation point 200 may also affect the pressure level of the attached flow upstream the stagnation point 200. Thus, stall may also be detected due to a changed fluid pressure upstream the rear stagnation point 200.

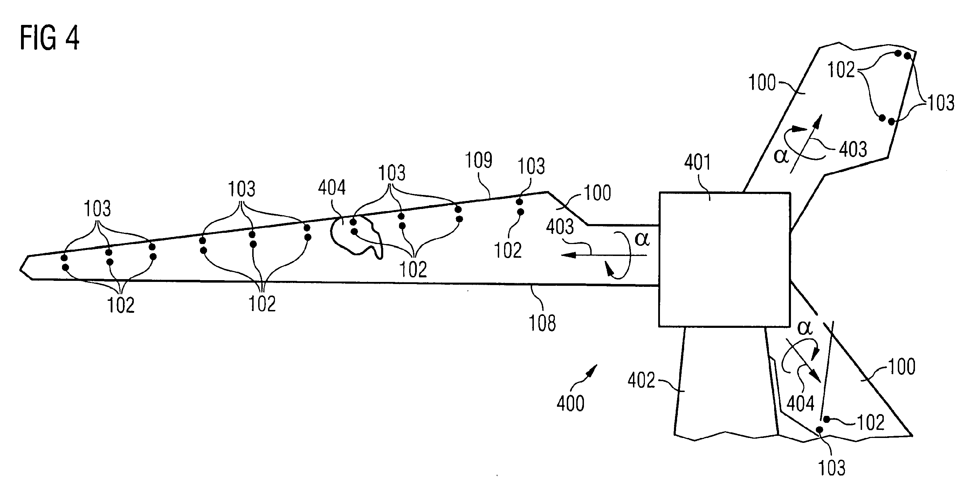

**Fig. 4** illustrates a wind turbine 400 that comprises a nacelle 401 and a wind turbine tower 402 and a number of blades 100. According to the exemplary embodiment shown in Fig. 4, three blades 100 are connected to the nacelle 401. Starting from the nacelle 401 a longitudinal direction 403 of the blade 100 is shown. Each blade 100 extends in the longitudinal direction 403 starting from the nacelle 401 to the free end, i.e. the tip, of the blade 100. Furthermore, Fig. 4 illustrates a pitch angle α around which the blade 100 may be rotated. It is shown, that the pitch angle α may be similar to the rotational angle of each blade 100 around the longitudinal direction 403 of each blade 100.

Furthermore, Fig. 4 shows a distribution of the pressure gauge devices 102 and the additional pressure gauge devices 103 along the longitudinal direction 403. Thus, by providing a plurality of pressure gauge devices 102 and additional pressure gauge devices 103 along the longitudinal direction 403 a detailed fluid flow pattern along the whole blade surface 101 of each blade 100 may be provided. Thus, if a local dirt particle 404 causes local stall of the fluid 104, in the regions of the other pressure gauges 102, 103 attached flow conditions might still exist. Thus, an adjustment of the pitch angle α in response to the measurement values of the pressure in the region of the local dirt particle 404 would lead to a lower degree of efficiency of the whole blade 100. Thus, by measuring the flow pattern of the fluid 104 along the whole longitudinal direction 403, local values of the measured pressures may be disregarded from the overall calculation of the best pitch angle of the blade 100.

Furthermore, a control unit may calculate an individual pitch angles α for each of the plurality of blade 100 according to their individual values of the measured flow patterns. Thus, an improved adjustment for each of the blades 100 may be provided and the efficiency of the wind turbine 400 will be improved.

The pressure gauge devices 102, 103 may also compare the measured pressure of the fluid with statistic or reference values of pressures of the fluid, so that by comparison of the measured fluid pressure with the reference pressure of the fluid 104, stall may be detected.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

## Claims

1. Blade for a wind turbine, the blade (100) comprising:
a blade surface (101); and
a pressure gauge device (102) for providing a pressure value for being used for a stall detection;
wherein the pressure gauge device (102) is located at the blade surface (101) in such a manner, that a pressure of a fluid (104) that flows along the blade surface (101) is measurable by the pressure gauge device (102).

2. Blade of claim 1, further comprising:
an additional pressure gauge device (103) ;
wherein the additional pressure gauge device (103) is located at the blade surface (101) in such a manner, that an additional pressure of the fluid (104) that flows along the blade surface (101) is measurable by the pressure gauge device (102).

3. Blade of claim 1 or 2;
wherein the blade surface (101) is the suction side (105) of the blade (100).

4. Blade of one of claims 1 to 3;
wherein the blade (100) comprises in a flow direction (107) of the fluid (104) a first portion with an increasing thickness (t) and a second portion with a decreasing thickness (t);
wherein at least one of the pressure gauge device (102) and the additional pressure gauge device (103) is located in the decreasing portion.

5. Blade of claim 4;
wherein the pressure gauge device (102) and the additional pressure gauge device (103) are arranged in a row along the flow direction (107) of the fluid (104).

6. Blade of one of claims 2 to 5;
wherein the blade(100) extends along a longitudinal direction (403);
wherein the pressure gauge device (102) and the additional pressure gauge device (103) are located along the longitudinal direction (403) of the blade (100).

7. Blade of one of claims 1 to 6;
wherein the blade (100) comprises a plurality of pressure gauge devices (102).

8. Wind turbine device comprising at least one blade (100) according to one of claims 1 to 7.

9. Wind turbine device of claim 8, further comprising:
a control unit being assigned to the at least one blade;
wherein the control unit is adapted for controlling a pitch angle (α) of the at least one blade (100) in response to the measured pressure of the fluid (104).

10. Method of detecting stall on a blade (100) for a wind turbine, the method comprising:
measuring a pressure of a fluid (104) flowing along a blade surface (101) of the blade (100) by means of a pressure gauge device (102) which is located at the blade surface (101) .
